# EUROPEAN PATENT APPLICATION

(11) **EP 4 625 744 A1**
(43) Date of publication of application: **01.10.2025**
(21) Application number: 24167424.1
(22) Date of filing: 28.03.2024
(51) Int. Cl.: H02J 3/24, H02J 3/38, H02J 3/32, H02J 3/48

(54) **CONTROL APPARATUS, SYSTEM AND METHOD FOR HYDROPOWER PLANT**

(71) Applicant: PVO-Vesivoima Oy, 91100 Ii (FI)
(72) Inventor: Selek, Istvan, 91100 Ii (FI); Vasara, Joni, 91100 Ii (FI)
(74) Representative: Kolster Oy Ab

(57) **Abstract**

A control apparatus for a hydropower plant includes a model unit (400) with a model of an input-output response of a general hydropower entity, the input referring to a grid frequency parameter of a power grid and the output referring to electric output power of the general hydropower entity. The control apparatus (200) receives continuously a measured grid frequency parameter on a power grid which the hydropower plant is electrically coupled with, performs on-line data processing of the measured grid frequency parameter, and determine at least one characteristic operational property of the power grid based on the on-line data processing, and optimizes resources of the hydropower plant to be consumed within predetermined technical requirements for frequency containment reserve providers in response to the at least one characteristic operation property in order to enable the hydropower plant to output electric power in an optimized manner while fulfilling the technical requirements.

## Description

### Field

The invention relates to a control apparatus and a control system for a hydropower plant, and a control method of a hydropower plant.

### Background

The primary purpose of electric power production is to satisfy the need for electric power. However, since producers and consumers are spatially distributed, a medium is required to transmit the product i.e. electric power to the users. This medium, known as distribution network, together with the production and consumption facilities form a system referred to as an electric power grid.

Because the consumption of electric power varies at different moments of time, the production of electric power should be adjusted in response to the varying consumption to maintain a well-functioning power grid. Hydroelectric power stations can adjust their production of electric power up and down, and the adjustability can be utilized to respond with the production to the needs of consumption.

However, how to keep the electric power grid stable in all conditions is regulated by authorities. The companies involved in energy production are encouraged to imply regulatory control by participating in the so-called Frequency Containment Reserve (FCR) markets. Any company willing to participate must fulfill the FCR requirements that define rules for and examine the dynamic frequency to power (input-output) behavior of a regulated plant.

At the moment, qualifications for the FCR markets can be obtained through test procedures that are reassessed every five years. There are, however, technical problems related to the performance and endurance of the power plant burdened by the qualification which is considered challenging to meet with the prior art control approaches.

### Brief description

The present invention seeks to provide an improvement in the control of production of electric power.

The invention is defined by the independent claims. Embodiments are defined in the dependent claims.

If one or more of the embodiments is considered not to fall under the scope of the independent claims, such an embodiment is or such embodiments are still useful for understanding features of the invention.

### List of drawings

Example embodiments of the present invention are described below, by way of example only, with reference to the accompanying drawings, in which
Figure 1 illustrates an example of a power plant;
Figure 2 illustrates an example of a Kaplan turbine arrangement;
Figure 3 illustrates an example of a control apparatus;
Figure 4A illustrates an example of a control apparatus with a model unit and a governor;
Figure 4B illustrates an example of the control apparatus with a load distributor;
Figure 5 illustrates an example of the control apparatus with the model unit, theload distributor, a storage controller, a storage, a generator and simplified switches for coupling with the grid and/or the storage ;
Figure 6 illustrates an example of a reasonable input-output behaviour with respect to a step input defined by a model of a general hydropower plant;
Figure 7 illustrates a Bode-diagram of an ideal hydropower plant; and
Figure 8 illustrates of an example of a flow chart of a control method.

### Description of embodiments

The following embodiments are only examples. Although the specification may refer to "an" embodiment in several locations, this does not necessarily mean that each such reference is to the same embodiment(s), or that the feature only applies to a single embodiment.

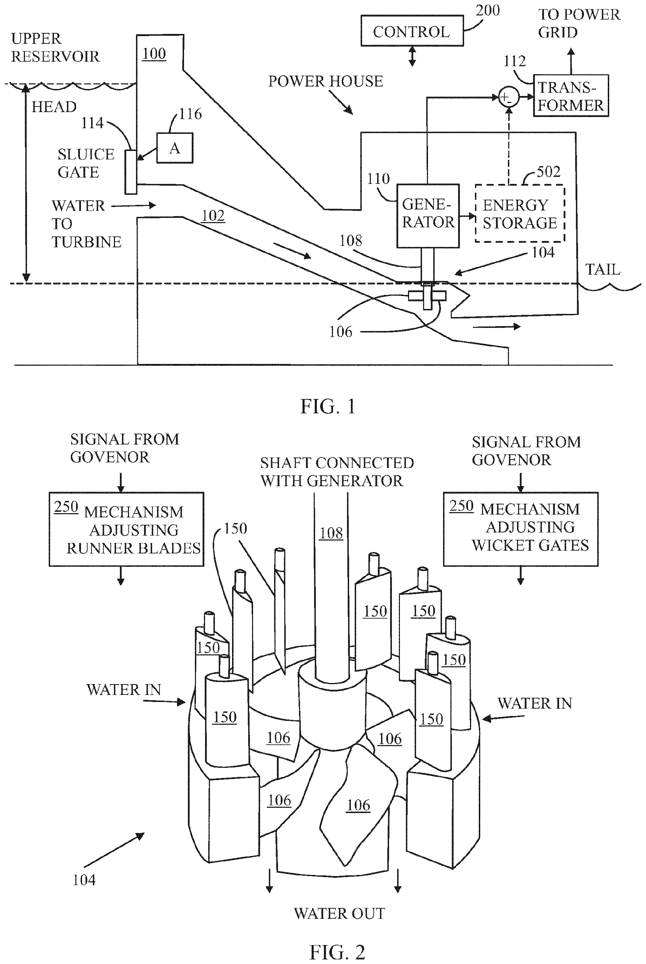

Fig. 1 illustrates an example of a hydropower plant that may have an energy storage. The hydropower plant has a dam structure 100 that blocks free water flow from a reservoir such as lake. The dam structure 100 necessarily comprises a dam but it may also include a powerhouse with one or more generator halls and potentially also some offices and/or other rooms. The water flows through one or more water channels 102 called penstock each of which is made within and/or through the dam structure 100 and they lead water of the reservoir to a hydro turbine arrangement 104. The flowing water makes the shaft 108 of the turbine arrangement 104 rotate because runner blades 106 of the turbine 104 are like propellers that cause torque that results in rotation of the shaft 108 of the turbine arrangement 104 (see also Fig. 2). The shaft 108 then causes the rotation of a rotor (not shown in Figs) of an electric generator arrangement 110. The electric generator arrangement 110 then produces electric power that is usually called alternating current that may be transformed by a transformer 112 into suitable voltage for consumption and the electric power is then fed to the power grid.

Each water channel 102 from the reservoir to the turbine arrangement 104 has typically a sluice gate 114. The sluice gate 114 can be opened and closed in order to allow water to flow through the water channel 102 to a turbine arrangement 104 or block the water flow through the water channel 102. The sluice gate 114 may also be used to restrain the water flow to the turbine arrangement 104, and the feature may be used to control the electric power production of the generator arrangement 110. The sluice gate 114 is moved by a sluice adjustment mechanism 116 that may be powered hydraulically and/or electrically. The sluice adjustment mechanism 116 may be a part of an adjustment mechanism arrangement 250 of the hydropower plant. Sometimes the adjustment mechanism may be powered manually. The sluice gate 114 may comprise one or more components, that may move vertically, horizontally or in a direction therebetween. A person skilled in the art is familiar with sluice gates and their adjustment and movement.

Water from the reservoir may also flow through a spillway (not shown in Figs) to another side of the dam 100 but then it is not flowing to and through a turbine arrangement 104.

The volume of water per time unit and a change of elevation, called head, determines the potential energy that may at maximum transformed into electric power by the generator arrangement 110. Instead of a reservoir the hydropower plant may generate electric power based on run-of-the-river.

A control apparatus 200 includes a dynamical response model included in the model unit 400 that defines a frequency-to-power response of a general or ideal hydropower entity. The frequency-to-power response can be understood to include a frequency-deviation-to-power response model. The response model may also be considered a model of an input-output response of the general or ideal hydropower entity.

The response model does not represent and/or capture the behavior of (i.e., is not a model of) the hydropower plant or its elements but it is merely a dynamic mapping between frequency and power.

That means the dynamic (frequency-to-power) behavior of a regular or hybrid hydropower plant that is controlled by the control apparatus 200 is made to resemble the frequency-to-power behavior of the model 400..

The model of the model unit 400 may be scaled with respect to natural, constructional and/or design features such as characteristic head and characteristic flow of water expressed mass/volume per time unit that are more or less constant. The technical details such as turbine or generator type are not taken into account in the model. The characteristic flow may refer to a maximum flow or an average flow, for example. The characteristic head may correspondingly be a maximum or average head, for example. That makes the model technically simple and effective. The constant feature means a feature that is not adjustable by the hydropower plant alone or at all. For example, the head may be lowered by making the flow from the reservoir larger than the flow to the reservoir. Correspondingly, the head may be raised by blocking the flow from the reservoir. However, the hydropower plant cannot control the flow to the reservoir. It depends on rain, for example.

The efficiency and/or other operation parameters of the turbine arrangement 104 and the generator arrangement 110 etc. may be based on theory, simulation and/or available statistical information are included in the governor 402 block of the control apparatus 200.

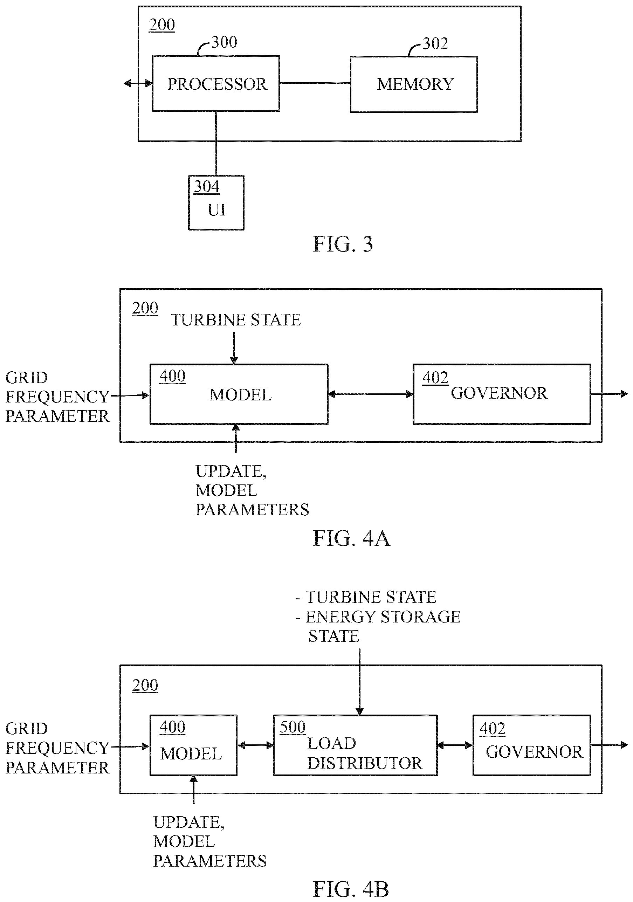

As illustrated in Figs. 3 and 4A, the control apparatus 200 includes a model unit 400 with a response model of an input-output response of a general hydropower entity. The control apparatus 200 receives continuously a measured grid frequency parameter on a power grid which the hydropower plant is electrically coupled with. Here the continuous reception of the measured grid frequency parameter can also be understood that the control apparatus 200 receives repeatedly the grid frequency parameter. The control apparatus 200 performs on-line data processing of the measured grid frequency parameter, and determines at least one characteristic operational property of the power grid based on the on-line data processing. The control apparatus 200 optimizes resources of the hydropower plant to be consumed within predetermined technical requirements for frequency containment reserve providers in response to the at least one characteristic operation property in order to enable the hydropower plant to output electric power in an optimized manner while fulfilling the technical requirements.

The input to the control apparatus 200 refers to a grid frequency parameter of a power grid, and the output refers to control signal(s) that is sent to the blade adjusting mechanism 250 and storage control 504. The grid frequency parameter may refer to a frequency deviation from a nominal frequency. The grid frequency parameter indicates a potential imbalance in the power grid that should be corrected.

The model unit 400 of the control apparatus 200 may perform on-line signal processing, data analysis and related calculations including but not limited to constrained/unconstrained optimization, filtering and signal processing approaches in response to the grid frequency parameter while constraining the optimization within predetermined technical requirements for frequency containment reserve providers. Then the hydropower plant, being either regular or hybrid, can output electric power in an optimized manner while fulfilling the technical requirements. The solution found by the optimization thus satisfies the predetermined technical requirements.

Frequency Containment Reserve is a tool for maintaining power system stability while ensuring adequate performance metrics. By swiftly responding to imbalances between electric power supply and demand, FCR helps restore grid frequency to its nominal value, preventing disruptions and ensuring stable and reliable electric power supply.

The optimization or the constrained optimization can be understood as the process of optimizing a desired function with respect to variables used in the function in the presence of constraints that limit the variables. The desired function may be a cost function. The cost function may relate to resources such as energy of the process. The consumption or usage of resources may be minimized. Alternatively, it may be considered that the optimization relating to resources is reflected as a reward function, which can be maximized. If maintenance period becomes longer because of lowered energy usage, the situation may be considered as a reward function or a cost function, for example.

In an embodiment, the resources may refer to energy that is consumed by the adjustment. Thus, energy consumption of the adjustment may be optimized. Optimization may improve efficiency of the hydropower plant, for example. The optimization may mean that the energy consumption is minimized.

Alternatively or additionally, the resources may refer to wear of mechanical parts that perform the adjustment. That means, mechanical movement of the adjustment is taken into account. It is known that the longer distances sluice gates, wicket gates and/or runner blades move and/or their motors are in motion during a monitored time such as a day, week or a year, the more they wear over time and their capability and/or accuracy to adjust the electric power production decreases as a function of time. The average movement may be measured also per a time unit. The time they keep a desired capacity and accuracy can be lengthened by the optimization. Additionally, the maintenance period may become longer which is a technical and economical advantage. Optimization may mean that the wear of the mechanical components used for the adjustment is minimized.

Fig. 2 illustrates an example of a Kaplan turbine arrangement 104. The turbine arrangement 104 comprises the wicket gates 150, the runner blade 106 and a shaft 108 that is connected with the generator arrangement 110. The rotation of the shaft 108 of the turbine arrangement 104 makes the rotor (not shown in Figs) of the generator arrangement 110 rotate, which causes the generator arrangement 110 to generate electric power.

In an embodiment, the model unit 400 of the control apparatus 200 may output an adjustment signal, which is based on the at least one characteristic operation property and the requirements available to the model unit 400, for a turbine arrangement 104 of the hydropower plant in order to cause the hydropower plant to provide electric power based on the adjustment signal.

In an embodiment, the adjustment signal may be received by the adjustment mechanism arrangement 250, which is also shown in Fig. 2. The adjustment mechanism arrangement 250 may adjust the turbine arrangement 104 to cause a generator arrangement 110 of the hydropower plant to output electric power based on the adjustment signal.

In an embodiment, the hydropower plant may be a hybrid hydropower plant. The model unit 400 may output an adjustment signal, which is based on the at least one characteristic operation property and the requirements available to the model unit 400, for a governor 402 and a storage controller 504 of the hybrid hydropower plant in order to cause the hybrid hydropower plant to provide electric power based on the adjustment signal.

In an embodiment, the adjustment mechanism arrangement 250 may adjust at least one of the following: wicket gates 150, runner blades 106 and sluice gate 114, which may also be called a penstock gate. The sluice gate 114 and the wicket gates 150 may adjust the turbine arrangement 104 by controlling water flow to the turbine arrangement 104.

The runner blades 106 under pressure of the flowing water cause torque to the shaft 108 between the turbine arrangement 104 and the generator arrangement 110. The torque makes the shaft 108 to turn. The shaft 108 then causes the rotation of the rotor of the electric generator 110. The torque can be increased and decreased by either turning the runner blades 106 or increasing or decreasing waterflow to the hydroturbine. The waterflow to the turbine arrangement 104 can be controlled by the wicket gates 150 and/or the sluice gate 114.

The wicket gates 150, the runner blades 106 and the sluice gate 114 can be considered actuators of the electric energy production process. They produce a torque and rotational energy i.e. angular energy that is a form of kinetic energy to the turbine arrangement 104 in a controlled manner. They can be powered electrically, pneumatically and/or hydraulically.

In an embodiment, the response model may be constrained to satisfy the technical requirements for the frequency containment reserve providers set by authorities of the area of the hydropower plant.

In an embodiment, the model unit 400 may comprise data solely on a desired input-to-output dynamic behavior that is configured to satisfy the predetermined technical requirements for frequency containment reserve providers. The data on the desired input-to-output dynamic behaviour is independent of turbine arrangement, adjustment mechanism, hydrodynamic parameters and energy storage metrics.

In an embodiment, the response model of the input-output response of the general hydropower entity may be based on a general turbine arrangement, a general adjustment mechanism arrangement and a general governor that controls the general turbine arrangement. The general turbine arrangement, the general adjustment mechanism arrangement and the general governor that controls the general turbine arrangement may be generalized forms of the turbine arrangement 104, the adjustment mechanism arrangement 250 and the turbine governor 402 that controls the turbine arrangement 104. The general turbine arrangement, the general adjustment mechanism arrangement and the general governor that controls the general turbine arrangement do not need to be present one by one in the model but their common effect is included in the model.

In an embodiment, the response model of the model unit 400 may include the hydrostatic head that may be assumed constant or variable as a function of time in the constrained optimization. The head may depend on the season and/or the weather, for example. The head is the height water falls from the reservoir to the turbine arrangement 104.

In an embodiment, an example of which is illustrated in Fig. 3, the control apparatus 200 may comprise one or more processors 300, and one or more memories 302 including computer program code. The one or more memories 302 and the computer program code may, with the one or more processors 300, cause control apparatus 200 at least to perform the on-line data processing of the measured grid frequency parameter, and determine the at least one characteristic operational property of the power grid based on the on-line data processing. Additionally, the one or more memories 302 and the computer program code may, with the one or more processors 300, cause control apparatus 200 to optimize the resources of the hydropower plant to be consumed within predetermined technical requirements for frequency containment reserve providers in response to the at least one characteristic operation property in order to enable the hydropower plant to output electric power in an optimized manner while fulfilling the technical requirements.

The term "computer" includes a computational device that performs logical and arithmetic operations. For example, a "computer" may comprise an electronic computational device, such as an integrated circuit, a microprocessor, a mobile computing device, a laptop computer, a tablet computer, a personal computer, or a mainframe computer. A "computer" may comprise a central processing unit, an ALU (arithmetic logic unit), a memory unit, and a control unit that controls actions of other components of the computer so that steps of a computer program are executed in a desired sequence. A "computer" may also include at least one peripheral unit that may include an auxiliary memory (such as a disk drive or flash memory), and/or may include data processing circuitry.

A user interface 304 may be a part of the controller apparatus 200 or it may be connectable with the controller apparatus 200. The user interface 304 means a data input/output device and/or unit. Non-limiting examples of a user interface include a touch screen, other electronic display screen, keyboard, mouse, microphone, handheld electronic game controller, digital stylus, display screen, speaker, and/or projector for projecting a visual display. The user may input the model, feed model parameters of the model to the controller apparatus 200 and update the model. The update may be needed when the predetermined technical requirements for frequency containment reserve providers change, for example.

A control system for a hydropower plant comprises the control apparatus 200. The control apparatus 200 receives measured data on grid frequency parameter of the electric power grid which the hydropower plant, an example of which is illustrated in Fig. 1, is coupled with. The grid frequency parameter may be a frequency deviation from a nominal frequency of the power grid. The nominal frequency of the power grid is typically 50 Hz or in some areas 60 Hz.

The control apparatus 200 performs the optimization based on the model and the grid frequency parameter. The optimization may be considered constrained optimization. The model unit 400 of the control apparatus 200 may receive in addition to the grid frequency parameter also information on the state of the turbine arrangement 104 and the state of the generator arrangement 110. The model unit 400 of the control apparatus 200, which may perform the optimization, outputs a control command to a governor 402 of the control apparatus 200 as is illustrated in Fig. 4A. The governor 402 may be a part of the control apparatus 200 or it may be a separate operational unit. Fig. 4A illustrates an example of the separate governor 402. The governor 402 may then send an adjustment signal to the adjustment mechanism arrangement 250 based on the control command sent to the governor 402 by the model unit 400. The model unit 400 may be a computer program such as an application or it may be an electric device comprising at least one processor and at least one memory with the computer program performing the operation of the model unit 400. The governor 402 may also comprise at least one processor and at least one memory with a computer program for controlling the adjustment mechanic arrangement 250. The governor 402 may additionally or alternatively comprise a PID-controller.

The response model of the model unit 400 of the control apparatus 200 may be considered an ideal response filter (IRF) that is a dynamic mathematical model (dynamical system) that transforms or filters the measured grid frequency signal into a power signal such that (a) the input-output response of the model unit 400 satisfies all requirements posed by the FCR requirements (and later releases of the requirements) and (b) provides a smooth i.e. optimized response that may aim at minimization of the load on the turbine arrangement 104 which may correspond with the movement of the runner blades 106, the wicket gates 150 and/or the sluice gate 114, for example. The design of the response model of the model unit 400 is independent of any individual hydropower plant, and it is conducted in the "office," relying on analytic calculations, simulations, and optimization approaches. Furthermore, the response model of the model unit 400 defines the transition behavior of the hydropower plant regarding load changes. Once obtained, the input-output response is calculated in real-time by the control apparatus 200 defining the reference power response for the hydropower plant.

To be able to have a clear view of the function of the model unit 400, a related concept can be clarified. As outlined, the FCR providing unit is formed by the interconnection of the hydropower source such as an electric generator and its governor. Given that, the IRF is a mathematical model that defines the frequency to power (input-output) behavior of the hydropower source. In other words, the IRF sets the (dynamic) mapping between the frequency (input) and power (output) signals determining the dynamics of the hydropower source under feedback.

Given this concept, an "ideal" input-output behavior for the hydropower source can be constructed using engineering intuition based on a set of desired properties, including: 1. smooth response for step inputs; 2. negative, frequency-invariant signal magnification for harmonic excitation.

The smooth response step sets the goals for the transition between different load levels. The related scenario occurs when - given an initial load - extra or less (nominal) power is needed. For example, the physical realization of the power transition can be a smooth (first-order) exponential kinetics. Here that smooth response refers to an attenuated response which means that oscillation of the system is attenuated.

The negative, frequency-invariant signal magnification for harmonic excitation refers to a desired behavior in case the hydropower plant runs in synchronous mode (i.e., delivers FCR product). In this case, the plant reacts instantaneously to frequency drop/increase with a power increase/drop where the magnitude of the response is independent of the frequency of the input signal, referred to as the ideal scenario or the ideal plant, which means the general hydropower plaint.

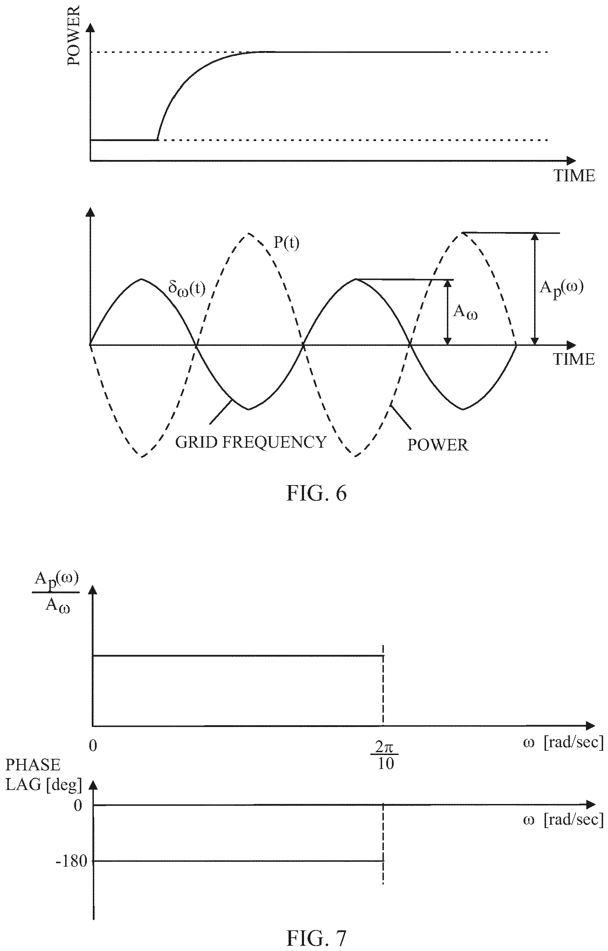

Putting these together, the dynamics of the ideal plant or the general hydropower plant can be represented by a Bode diagram depicted in Figure 7 using the notation conventions defined by Figure 6. As can be seen in Figure 7 the frequency invariant gain and phase lag are desired on a specified frequency range (not on the entire frequency horizon). The highest excitation frequency highlighted on the horizontal axis is defined by the requirements following the physical limitations of hydropower plants and the practical realization of plant governors.

Note that the outlined idealized behavior is not required by the FCR requirements. It is only used for the sake of clarity and understanding the presented technical solution.

With that said, the response model of the model unit 400 represents an ideal i.e. generalized hydropower plant that calculates a power value based on the state of the power source i.e. generator arrangement 110 and the frequency signal. The calculation procedure implemented by the model unit 400 is designed to result in the input-output behavior that is FCR-provision compliant. The calculation procedure can then be stored the one or memories of the model unit 400.

The adjustment mechanism arrangement 250 may, based on the adjustment signal, adjust the turbine arrangement 104 to cause a generator arrangement 110 of the hydropower plant to output electric power to the power grid based on the adjustment signal.

In an embodiment, one or more hydropower turbine arrangements 104 of the hydropower plant may be controlled based the response model of the model unit 400.

In an embodiment, the control apparatus 200 may estimate the energy consumed by the adjustment mechanism arrangement 250 required for the adjustment based on the model. That means the control apparatus 200 estimates, based on the response model of the model unit 400, the energy that a general hydropower entity would require for the adjustment.

In an embodiment, the control apparatus 200 may estimate the energy consumed by the adjustment of the adjustment mechanism arrangement 250. The consumed energy may be based on both the length of the mechanical movement required for the adjustment and pressure under which the movement is performed. The pressure may be estimated based on the head information of which is available or stored in the model unit 400.

Fig. 4B illustrates an example of the control apparatus 200 with the model of the model unit 400 and a potential load distributor 500. The governor 402 controls the turbine arrangement 104 by adjusting wicket blades 150, runner blades 106 and/or the sluice gate 114. The model unit 400 has the response model of the ideal hydropower entity that has an energy storage 502. The model unit 400 may then optimize the resources estimated to be consumed by adjustment with respect the frequency parameter of the grid. One of the resources is the energy storage 502. In order to store electric energy, the electric power can be converted to one or more forms of storable energy. The stored energy may at some other moment be converted back to electric energy. The energy storage 502 may include battery storage, for example. Other potential or additional energy storages include flywheel, compressed gas, and pumped hydro storage. A person skilled in the art is familiar with energy storages, *per se.*

The model unit 400 may then optimize the state of the turbine arrangement 104 with respect to a state of the energy storage 502. If there is too much production of electric power with respect to consumption which is indicated by the frequency deviation, and at the same time the energy storage 502 can store more energy, the model unit 400 may signal the load distributor 504 that at least a part of the electric energy generated by the generator arrangement 110 can be fed to the energy storage 502. If there is too little production of electric power with respect to consumption which is indicated by the frequency deviation, and at the same time the energy storage 502 has a lot of energy, the model unit 400 may signal the load distributor 500 that at least a part of the electric energy in the energy storage can be fed to the power grid.

The load distributor 500 may comprise at least one processor, at least one memory and a computer program that controls output of electric power from the energy storage 502 and the generator arrangement 100 to the power grid. Additionally, the load distributor 500 controls the feed of the electric power to the energy storage 502. The load distributor 500 sends control signals to the turbine governor 402 and the storage controller 504. The governor 402 maps the control signal information to the control command for the adjustment mechanic arrangement 250. The storage controller 504, in turn, causes charging of the storage 502 with the electric power produced by the generator arrangement 110 or discharging of the storage 502 to the power grid.

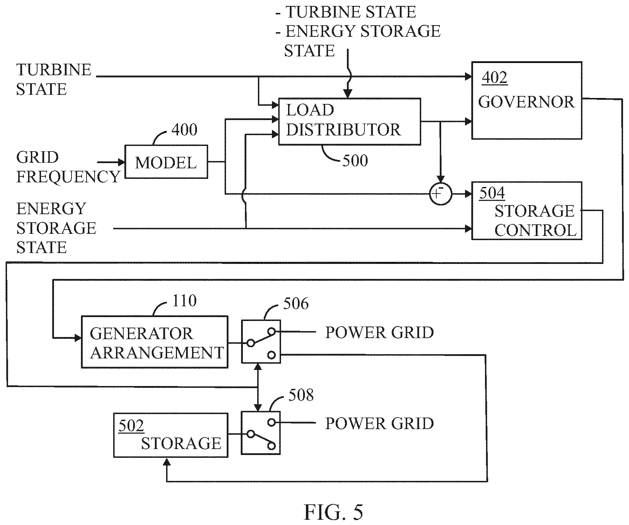

In an embodiment an example of which is illustrated in Fig. 5, the storage controller 504 may control switches 506 and 508 simultaneously such that when electric power is fed to the power grid by the generator arrangement 110, the energy storage 502 is not feeding the power grid. Alternatively, when the generator arrangement 110 is feeding electric power to the energy storage 502, no electric power of the generator arrangement 110 is fed to the power grid.

In an embodiment, the storage controller 504 may control the switches 506 and 508 such that when electric power from the generator arrangement 110 is fed to the power grid, the energy storage 502 also feeds the power grid.

In an embodiment, the storage controller 504 may control the switches 506 and 508 such that when electric power from the generator arrangement 110 is not fed to the power grid, the energy storage 502 is also prevented from feeding the power grid.

The switch 506 of the generator arrangement 110 can connect the generator arrangement 110 with the power grid or the energy storage 502. The switch 508 of the energy storage 502 can connect the energy storage 502 with the power grid or have no output connection at all.

The switches 506 and 508 are only non-limiting examples. The electric energy of the generator arrangement 110 can be connected with full or partial power with the power grid and/or the energy storage 502. In a similar manner, the energy storage 502 can be connected with full or partial power with the power grid.

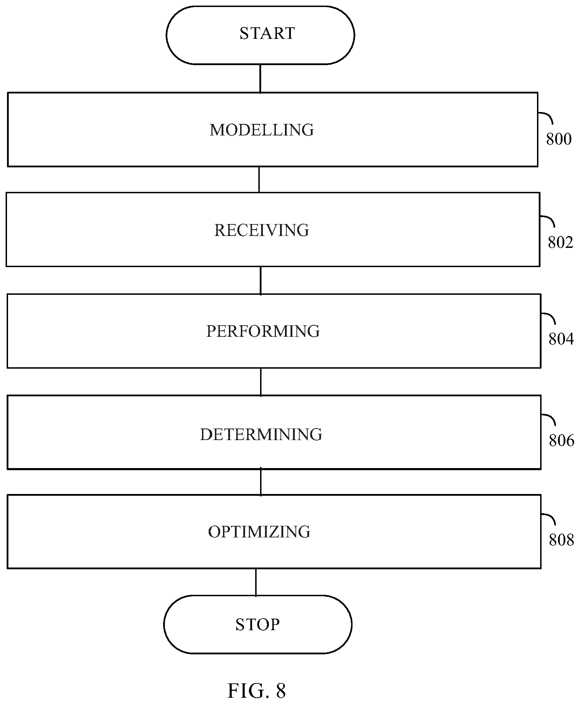

Fig. 8 illustrates an example of a control method of a hydropower plant. In step 800, an input-output response of a general hydropower entity is modelled by a model unit 400 of a control apparatus 200 of the hydropower plant, the input referring to a grid frequency parameter of a power grid and the output referring to output power of the general hydropower entity.

In step 802, measured data on grid frequency parameter of the electric power grid is received by the control apparatus 200, the hydropower plant being coupled with the electric power grid.

In step 804, on-line data processing of the measured grid frequency parameter is performed, and determine at least one characteristic operational property of the power grid is determined based on the on-line data processing.

In step 806, resources of the hydropower plant to be consumed within predetermined technical requirements for frequency containment reserve providers are optimized in response to the at least one characteristic operation property in order to enable the hydropower plant to output electric power in an optimized manner while fulfilling the technical requirements.

As the hydropower plant is coupled with the electric power grid, measured data on grid frequency parameter of the electric power grid is received continuously or repeatedly by the control apparatus 200. On-line data processing and related calculations (e.g., constrained optimization) are performed by the model unit 400 of the control apparatus 200, which constrains within predetermined technical requirements for frequency containment reserve providers for enabling the hydropower plant to output electric power in an optimized manner while fulfilling the technical requirements. The load distributor 500 may perform calculations that result in the decision of the amount of output of electric power from the energy storage 502 and the generator arrangement 100 to the power grid. The obtained decisions are sent to the turbine governor and storage control. A control command is sent by the turbine governor 402 to an actuator arrangement 250 of the turbine arrangement 104 based on the adjustment signal.

The turbine arrangement 104 is adjusted by the actuator arrangement 250 to cause a generator arrangement 110 of the hydropower plant to output electric power to the power grid based on the control command.

The method shown in Figure 8 may be implemented as a logic circuit solution or computer program. The computer program may be placed on a computer program distribution means for the distribution thereof. The computer program distribution means is readable by a data processing device, and it encodes the computer program commands, carries out the measurements and optionally controls the processes on the basis of the measurements.

The computer program may be distributed using a distribution medium which may be any medium readable by the control apparatus 200. The medium may be a program storage medium, a memory, a software distribution package, or a compressed software package. In some cases, the distribution may be performed using at least one of the following: a near field communication signal, a short distance signal, and a telecommunications signal.

A technical problem is that the FCR forces the unit to move (respond to frequency), and the turbine bearings are not designed for continuous movement. Consequently, the FCR-related problems are (1) qualification and (2) smooth operation (with as little movement as possible), which is challenging or almost impossible with the prior control approaches. This document presents an improvement to the prior art technical problem. A control apparatus (that may be referred to as FCR unit governor) that makes regular and hybrid power production FCR-providing unit compliant, that is, it allows regular and hybrid power production units to qualify for the provision of the Frequency Containment Reserve and fulfill the technical requirements (and its later releases). The control apparatus 200 may comprise a programmable logic controller (PLC) compliant software. The presented solution is possible to apply to Kaplan, Francis and Pelton turbines.

It will be obvious to a person skilled in the art that, as technology advances, the inventive concept can be implemented in various ways. The invention and its embodiments are not limited to the example embodiments described above but may vary within the scope of the claims.

## Claims

1. A control apparatus for a hydropower plant, **characterized in that** the control apparatus (200) includes a model unit (400) with a model of an input-output response of a general hydropower entity, the input referring to a grid frequency parameter of a power grid and the output referring to electric output power of the general hydropower entity;
the control apparatus (200) is configured to
receive continuously a measured grid frequency parameter on a power grid which the hydropower plant is electrically coupled with,
perform on-line data processing of the measured grid frequency parameter, and determine at least one characteristic operational property of the power grid based on the on-line data processing;
optimize resources of the hydropower plant to be consumed within predetermined technical requirements for frequency containment reserve providers in response to the at least one characteristic operation property in order to enable the hydropower plant to output electric power in an optimized manner while fulfilling the technical requirements.

2. The apparatus of claim 1, **characterized in that** the model unit (400) is configured output an adjustment signal, which is based on the at least one characteristic operation property and the requirements available to the model unit (400), for a governor (402) of a turbine arrangement (104) of the hydropower plant in order to cause the hydropower plant to provide electric power based on the adjustment signal.

3. The apparatus of claim 1, **characterized in that** the hydropower plant is a hybrid hydropower plant, and the model unit (400) is configured output an adjustment signal, which is based on the at least one characteristic operation property and the requirements available to the model unit (400), for a governor (402) and a storage controller (504) of the hybrid hydropower plant in order to cause the hybrid hydropower plant to provide electric power based on the adjustment signal.

4. The apparatus of claim 1, **characterized in that** the control apparatus (200) is constrained to satisfy the technical requirements for the frequency containment reserve providers set by authorities of the area of the hydropower plant.

5. The apparatus of claim 1, **characterized in that** the model unit (400) comprises data solely on a desired input-to-output dynamic behavior that is configured to satisfy the predetermined technical requirements for frequency containment reserve providers and is independent of turbine arrangement, adjustment mechanism, hydrodynamic parameters and energy storage metrics..

6. The apparatus of claim 3, **characterized in that** the control apparatus (200) comprises a load distributor (500) that is configured to control the output of electric power from an energy storage (502), output of the generator arrangement (100) to the power grid, and the feed of the electric power to the energy storage (502).

7. The control apparatus of claim 1, **characterized in that** the control apparatus (200) comprises one or more processors (300); and
one or more memories (302) including computer program code;
the one or more memories (302) and the computer program code configured to, with the one or more processors (300), cause control apparatus (200) at least to:
perform the on-line data processing of the measured grid frequency parameter, and determine the at least one characteristic operational property of the power grid based on the on-line data processing;
optimize the resources of the hydropower plant to be consumed within predetermined technical requirements for frequency containment reserve providers in response to the at least one characteristic operation property in order to enable the hydropower plant to output electric power in an optimized manner while fulfilling the technical requirements..

8. A control system for a hydropower plant, **characterized in that** a control apparatus (200) of the control system includes a response model of an input-output response of a general hydropower entity, the input referring to a grid frequency parameter of a power grid and the output referring to output power of the general hydropower entity;
the control apparatus (200) is configured to receive measured data on frequency deviation of the electric power grid which the hydropower plant is coupled with;
the control apparatus (200) is configured to perform
perform on-line data processing of the measured grid frequency parameter, and determine at least one characteristic operational property of the power grid based on the on-line data processing;
perform optimization of resources of the hydropower plant, the resources being consumed within predetermined technical requirements for frequency containment reserve providers, in response to the at least one characteristic operation property in order to enable the hydropower plant to output electric power in an optimized manner while fulfilling the technical requirements., and output an adjustment signal to a governor (402) of a turbine arrangement (104) of the hydropower plant, the adjustment signal being based on the optimization;
the governor (402) is configured to send a control command to an actuator arrangement (250) of turbine arrangement (104) based on the adjustment signal;
the actuator arrangement (250) is configured to adjust the turbine arrangement (104) to cause a generator arrangement (110) of the hydropower plant to output electric power to the power grid in the optimized manner based on the control command.

9. The system of claim 8, **characterized in that** the adjustment mechanism arrangement (250) is configured to adjust at least one of the following: wicket gates (150), runner blades (106) and sluice gate (114).

10. The system of claim 8, **characterized in that** at least one of one or more hydropower turbine arrangements (104) of the hydropower plant are configured to be controlled by the control apparatus (200).

11. The system of claim 8, **characterized in that** the control apparatus (200) is configured to estimate energy consumed by mechanical movement of the adjustment mechanic arrangement (250) required for the adjustment based on the model of the model unit (400), and optimize the energy.

12. The system of claim 8, **characterized in that** the control apparatus (200) is configured to estimate energy consumed by both a length of mechanical movement of the adjustment mechanic arrangement (250) required for the adjustment based on the model (400), and pressure under which the movement is performed, the pressure being stored in the model unit (400).

13. The apparatus of claim 8, **characterized in that** the control apparatus (200) comprises a load distributor (500) that is configured to control output of electric power from the energy storage (502), output of the generator arrangement (100) to the power grid, and the feed of the electric power to the energy storage (502).

14. A control method of a hydropower plant, **characterized by**
modelling (800), by a model of a control apparatus (200) of the hydropower plant, an input-output response of a general hydropower entity, the input referring to a grid frequency parameter of a power grid and the output referring to output power of the general hydropower entity;
receiving (802), by the control apparatus (200), measured data on grid frequency parameter of the electric power grid which the hydropower plant is coupled with;
performing (804) on-line data processing of the measured grid frequency parameter,
determining (806) at least one characteristic operational property of the power grid based on the on-line data processing; and
optimizing (808) resources of the hydropower plant to be consumed within predetermined technical requirements for frequency containment reserve providers in response to the at least one characteristic operation property in order to enable the hydropower plant to output electric power in an optimized manner while fulfilling the technical requirements.
